Europäisches Patentamt

European Patent Office

Office européen des brevets

(11) Veröffentlichungsnummer: **0 492 493 A2**

## (12) EUROPÄISCHE PATENTANMELDUNG

(21) Anmeldenummer: 91121927.7

(22) Anmeldetag: 20.12.91

(51) Int. Cl.5: **G09F 3/00**, C08L 27/06,
C08K 5/00, //(C08K5/00,5:57)

(30) Priorität: 28.12.90 DE 4042067

(43) Veröffentlichungstag der Anmeldung:
01.07.92 Patentblatt 92/27

(84) Benannte Vertragsstaaten:
AT BE CH DE DK ES FR GB GR IT LI LU NL

(71) Anmelder: HOECHST AKTIENGESELLSCHAFT
Postfach 80 03 20
W-6230 Frankfurt am Main 80(DE)

(72) Erfinder: Mücke, Rainer, Dr.
Hoher Göllweg 14
W-8269 Burgkirchen(DE)
Erfinder: Schiller, Johann
Mittling 25 1/6
W-8262 Neuötting(DE)

(54) Verwendung einer glasklaren Polyvinylchloridfolie als Etikettenfolie.

(57) Es wird eine Polyvinylchloridfolie für die Etikettierung von Behältnissen beschrieben, die nach der Etikettierung einer Naßpasteurisierung ausgesetzt werden. Die empfohlene glasklare PVC-Etikettenfolie besteht im wesentlichen aus Masse- oder Suspensions-Polyvinylchlorid als Hauptkomponente, einem Wärmestabilisator aus der Gruppe der Zinnstabilisatoren und einem besonders ausgewählten Gleitmittel und ist auch nach dem Aussetzen einer Naßpasteurisierung glasklar.

EP 0 492 493 A2

Die Erfindung betrifft die Verwendung einer glasklaren Polyvinylchloridfolie zur Etikettierung von Behältnissen, die anschließend einer Naßpasteurisierung ausgesetzt werden.

Glasklare Polyvinylchloridfolien werden bekanntlich vorteilhaft als Etiketten auf Behältnissen, wie Flaschen, Dosen, Konserven und dergleichen, verwendet. Neben der Glasklarheit ist häufig auch gute Bedruckbarkeit und Wärmeschrumpfbarkeit erwünscht. Solche Folien gehören schon seit langem zum Stand der Technik und sind zum Beispiel in den beiden US-Patentschriften 4,247,663 und 4,264,010 beschrieben.

In neuerer Zeit entstand ein Bedarf nach Etikettenfolien auf der Basis von Polyvinylchlorid, die einer ganz speziellen Behandlung standhalten sollten, nämlich der Naßpasteurisierung. Unter Pasteurisieren versteht man bekanntlich eine Wärmebehandlung bei einer Temperatur von etwa 70 bis 90 °C zur Haltbarmachung (Konservierung) von Lebensmitteln, wie Milch, Wein, Bier, Fruchtsäften, Babynahrung und dergleichen. Bei der Naßpasteurisierung werden die Behältnisse, insbesondere Glasflaschen, Glasbecher und Glasdosen in verschiedenster Form und Größe, in denen sich das Konservierungsgut befindet, in ein Wasserbad von 70 bis 90 °C gesetzt und darin circa 0,2 bis 1 Stunde lang gehalten. Während dieser Zeit werden die an den Behältnissen angebrachten Etiketten nicht nur dem genannten Wärmestoß, sondern gleichzeitig auch heißem Wasser und Wasserdampf ausgesetzt. Unter "Etiketten" werden hier die an Behältnissen im Schrumpfverfahren, Klebeverfahren und dergleichen angebrachten Folienabschnitte beliebiger Größe verstanden (Zettel, Schilder, Umhüllungen und dergleichen), also Folienabschnitte, die nur einen kleinen Teil oder die mehr oder weniger das ganze Behältnis bedecken. Es hat sich gezeigt, daß die im Stand der Technik für das Etikettieren von Behältnissen empfohlenen glasklaren Polyvinylchloridfolien während der Naßpasteurisierung trüb werden und das erhaltene trübe Aussehen nach dem Pasteurisiervorgang beibehalten. Diese Polyvinylchlorid-Etiketten trüben sich also während der Naßpasteurisierung dauerhaft mehr oder weniger stark ein. Es versteht sich von selbst, daß daraus nicht nur eine Beeinträchtigung des Aussehens der gesamten Etikette, sondern insbesondere auch eine Beeinträchtigung der Klarheit der an der Etikette angebrachten Information in Form von Schrift, Bildern und dergleichen resultiert.

Die Aufgabe der Erfindung besteht demnach darin, eine solche glasklare Polyvinylchloridfolie vorzuschlagen, die einer Naßpasteurisierung ohne Beeinträchtigung ihrer ursprünglichen Eigenschaften, insbesondere der Glasklarheit, ausgesetzt werden kann. Die glasklare Ausgangsfolie soll also mit einem Wort naßpasteurisiertauglich sein.

Es wurde überraschenderweise gefunden, daß solche Polyvinylchloridfolien naßpasteurisiertauglich sind, die im wesentlichen aus

A) 100 Gew.-Teilen Polyvinylchlorid, ausgewählt aus der Gruppe bestehend aus Masse-Polyvinylchlorid und Suspensions-Polyvinylchlorid,

B) 0,05 bis 2 Gew.-Teilen, vorzugsweise 0,1 bis 1,5 Gew.-Teilen, Gleitmittel, ausgewählt aus der Gruppe bestehend aus Fettsäuren, Fettsäureamiden, Estern von Fettsäuren mit mehrwertigen Alkoholen, Estern von Fettsäuren und Dicarbonsäuren mit mehrwertigen Alkoholen, Estern von Phthalsäure mit ein- oder mehrwertigen Alkoholen und Polyethylenwachse, und

C) 0,3 bis 3 Gew.-Teilen, vorzugsweise 0,5 bis 2 Gew.-Teilen, Wärmestabilisator, ausgewählt aus der Gruppe der Zinnstabilisatoren,

bestehen.

Die erfindungsgemäß vorgeschlagenen Folien zur Etikettierung von Behältnissen, die etikettiert einer Pasteurisierung im Wasserbad bei etwa 70 bis 90 °C ausgesetzt werden, sind speziell ausgewählte Polyvinylchloridfolien, und zwar sowohl hinsichtlich Polyvinylchlorid als auch hinsichtlich Gleitmittel und Stabilisator sowie gegebenenfalls weiteren Zusätzen, wie Schlagzähmodifier und dergleichen.

Das Polyvinylchlorid der erfindungsgemäß vorgeschlagenen Folien stellt die Hauptkomponente dar und ist ein Masse-Polyvinylchlorid (M-PVC) und/oder ein Suspensions-Polyvinylchlorid (S-PVC). Emulsions-Polyvinylchlorid (E-PVC) führt nicht zum angestrebten Ergebnis. Die Begriffe Masse-Polyvinylchlorid und Suspensions-Polyvinylchlorid sind wohlbekannt und brauchen deshalb nicht weiter erläutert zu werden. Der K-Wert (Polymerisationsgrad) des M-PVC und des S-PVC kann in weiten Grenzen variieren. Er liegt im allgemeinen bei 50 bis 75, vorzugsweise 55 bis 65. Unter "Polyvinylchlorid" werden Vinylchloridhomopolymere und Vinylchloridcopolymere verstanden. Die Vinylchloridcopolymeren können die üblichen Comonomeren, wie Ethylen, Propylen, Vinylacetat und dergleichen, in einer Menge von bis zu 20 Gew.-%, Gewichtsprozente bezogen auf das Polymere, enthalten. Von den beiden in Rede stehenden Polyvinylchloriden, M-PVC und S-PVC, ist das M-PVC bevorzugt. Besonders bevorzugt ist M-PVC-Homopolymerisat. Die Art und Weise der Masse-Polymerisation und die eingesetzten Initiatoren und gegebenenfalls anderen Polymerisationshilfsmittel sind nicht kritisch. Die erfindungsgemäß vorgeschlagene Folie oder anders ausgedrückt, die Formmasse, aus der die Folie hergestellt worden ist, besteht also in der Hauptkomponente vorzugsweise aus Masse-PVC der genannten K-Werte, wobei Masse-PVC-Homopolymerisat bevorzugt ist.

Die erfindungsgemäß vorgeschlagenen Folien sind ferner vor allem durch das ausgewählte Gleitmittel gekennzeichnet. Übliche Gleitmittel für Folien oder Formmassen auf der Basis von Polyvinylchlorid sind bekanntlich Fettsäuren, Fettalkohole, Fettsäureamide, Metallseifen, Ester von Fettsäuren mit ein- oder mehrwertigen Alkoholen, Ester von Dicarbonsäuren mit ein- oder mehrwertigen Alkoholen, Ester von Fettsäuren und Dicarbonsäuren mit mehrwertigen Alkoholen (das sind die sogenannten Mischester oder Komplexester), Ester von Phthalsäure mit ein- oder mehrwertigen Alkoholen und natürliche oder synthetische Wachse. Im Rahmen der vorliegenden Erfindung hat sich herausgestellt, daß nur solche Polyvinylchloridfolien den angestrebten Effekt aufweisen, die neben dem genannten Polyvinylchlorid ein besonders ausgewähltes Gleitmittel enthalten. So hat sich überraschenderweise herausgestellt, daß aus der überaus großen Zahl von PVC-Gleitmitteln jene aus der Gruppe der Fettsäuren, Fettsäureamide, Ester von Fettsäuren mit mehrwertigen Alkoholen, Ester von Fettsäuren und Dicarbonsäuren mit mehrwertigen Alkoholen, Ester von Phthalsäure mit ein- oder mehrwertigen Alkoholen und bestimmter Wachse (Polyethylenwachse) geeignet sind, nicht aber zum Beispiel jene aus den umfangreichen Gruppen der Fettalkohole, Metallseifen und Montanwachse, wie Wachs E, Wachs OP und Wachs S.

Im folgenden werden die für die erfindungsgemäß vorgeschlagenen Folien geeigneten Gleitmittel der Reihe nach noch näher beschrieben. Fettsäuren sind vorzugsweise Palmitinsäure und Stearinsäure. Fettsäureamide sind vorzugsweise Mono- oder Diamide von Palmitinsäure oder Stearinsäure und Ethylendiamin, zum Beispiel Ethylendiamindipalmitat (bis-Palmitoyl-ethylendiamin) und Ethylendiamindistearat (bis-Stearoyl-ethylendiamin). Ester von Fettsäuren mit mehrwertigen Alkoholen sind vorzugsweise Partialester oder Vollester von $C_{12}$ bis $C_{18}$-Fettsäuren mit Glycerin, zum Beispiel Glycerinmonostearat, Glycerinmonooleat, Glycerindioleat, Glycerintrilaurat und Glycerintristearat. Ester von Fettsäuren und Dicarbonsäuren mit mehrwertigen Alkoholen sind vorzugsweise Ester von $C_{12}$ bis $C_{18}$-Fettsäuren, insbesondere $C_{18}$-Fettsäuren, und $C_4$ bis $C_8$-Dicarbonsäuren, insbesondere Adipinsäure, mit Glycerin, Erythrit, Pentaerythrit, Trimethylolethan oder Trimethylolpropan, insbesondere mit Pentaerythrit, zum Beispiel die Misch- oder Komplexester aus Adipinsäure, Ölsäure und Pentaerythrit im Molverhältnis von 1 : (2 bis 3) : (1 bis 1,5) oder aus Adipinsäure, Stearinsäure und Pentaerythrit im Molverhältnis von 1 : (2 bis 3) : (1 : 1,5). Phthalsäureester sind vorzugsweise Ester von Phthalsäure (Mono- oder Diester) mit $C_{10}$ bis $C_{18}$-Fettalkoholen oder Cyclohexanol, zum Beispiel Distearylphthalat, Decyl-stearyl-phthalat und Dicyclohexylphthalat. Polyethylenwachse sind vorzugsweise Polyethylenwachsoxydate (auch oxidiertes Polyethylenwachs genannt) mit den folgenden drei charakteristischen Werten, das heißt mit einer mittleren Molmasse von 1 000 bis 15 0000, vorzugsweise 4 000 bis 10 000, mit einer Dichte (20 ° C) von 0,96 bis 1,00 und mit einer Säurezahl von 14 bis 70. Es versteht sich von selbst, daß auch Mischungen der genannten Gleitmittel geeignet sind. Die bei den einzelnen Gruppen genannten Vertreter und Mischungen davon sind besonders bevorzugte Gleitmittel. Die Menge an Gleitmittel beträgt im allgemeinen 0,05 bis 2 Gew.-Teile pro 100 Gew.-Teile Polyvinylchlorid. Mit weniger als 0,05 Gew.-Teilen Gleitmittel pro 100 Gew.-Teile Polyvinylchlorid in der Folie oder Formmasse ist eine ausreichende Gleitmittelwirkung oft nicht mehr gewährleistet und mehr als 2 Gew.-Teile Gleitmittel könnten zu einer Beeinträchtigung der angestrebten Glasklarheit führen. Die bevorzugte Menge an Gleitmittel ist deshalb 0,1 bis 1,5 Gew.-Teile pro 100 Gew.-Teile Polyvinylchlorid.

Die Wärmestabilisatoren der erfindungsgemäß vorgeschlagenen Folie oder Formmasse zur Herstellung der Folie sind die für Polyvinylchlorid üblichen Zinnstabilisatoren, vorzugsweise die Zinncarboxylate, Zinnmercaptide und die Zinnthioglykolate, wobei die beiden letzteren (die in der Regel $C_1$ bis $C_{12}$-Alkylgruppen am Zinnatom haben) bevorzugt sind, zum Beispiel Di-n-butyl-zinn- oder Di-n-octyl-zinn-didodecylmercaptid und Dimethyl-zinn-, Di-n-butyl-zinn- oder Di-n-octyl-zinn-bis-2-ethylhexylthioglykolat.Die Menge an Wärmestabilisator beträgt in der Regel 0,3 bis 3 Gew.-Teile pro 100 Gew.-Teile Polyvinylchlorid. Mit weniger als 0,3 Gew.-Teilen pro 100 Gew.-Teile Polyvinylchlorid ist eine ausreichende Stabilisierung oft nicht mehr gewährleistet und mehr als 3 Gew.-Teile bringen in der Regel keinen zusätzlichen Stabilisierungseffekt. Die bevorzugte Menge liegt daher bei 0,5 bis 2 Gew.-Teilen auf 100 Gew.-Teile PVC.

Die erfindungsgemäß vorgeschlagenen Folien können neben den drei beschriebenen Komponenten, Polyvinylchlorid, Gleitmittel und Wärmestabilisator, auch noch zweckmäßige Additive und Hilfsmittel enthalten, wobei Schlagzähmodifizierungsmittel zur Erhöhung der Festigkeitswerte und Zähigkeitswerte bevorzugt sind. Schlagzähmodifier für Polyvinylchlorid sind bekanntlich die Polymerisate aus Acrylnitril, Butadien und Styrol (ABS), Methylmethacrylat, Butadien und Styrol (MBS), Methylmethacrylat, Acrylnitril, Butadien und Styrol (MABS) und gegebenenfalls auch chloriertes Polyethylen (CPE), Polymethylmethacrylat und Ethylen/Vinylacetatcopolymere. Die ABS-, MBS- und MABS-Polymeren weisen einen Butadiengehalt von jeweils vorzugsweise mindestens 35 Gew.-%, bezogen auf das Gesamtpolymerisat, auf. Besonders geeignet sind ABS-Polymere, deren Gehalt an Butadien 40 bis 70 Gew.-%, an Styrol 20 bis 40 Gew.-% und an Acrylnitril 10 bis 25 Gew.-%, jeweils bezogen auf das Gesamtpolymerisat, beträgt; MBS-Polymere, deren Gehalt an Butadien 40 bis 70 Gew.-%, an Styrol 10 bis 20 Gew.-% und an Methylmethacrylat 10 bis 50 Gew.-%, jeweils bezogen auf das Gesamtpolymerisat, beträgt; MABS-Polymere, deren Gehalt an Butadien 40 bis 60 Gew.-%, an Styrol 25 bis 40 Gew.-%, an Methylmethacrylat 15 bis 30 Gew.-% und an Acrylnitril weniger als 10 Gew.-%, jeweils bezogen auf Gesamtpolymerisat, beträgt. Es versteht sich von selbst, daß man solche Schlagzähmodifier wählt, welche die Klarheit der PVC-Folie nicht beeinträchtigen. Die Menge an Schlagzähmodifizierungsmittel beträgt im allgemeinen 1 bis 20 Gew.-%, vorzugsweise 2 bis 10 Gew.-%, bezogen auf das Gewicht der Folie oder der Formmasse, aus der die Folie bereitet wird.

Die Herstellung der erfindungsgemäß vorgeschlagenen glasklaren Polyvinylchloridfolie erfolgt in bekannter Weise dadurch, daß zunächst eine Mischung (Formmasse) aus den einzelnen Komponenten bereitet wird. Die beschriebenen Komponenten werden also in der jeweils genannten Menge in einem in der Kunststoffverarbeitung üblichen Mischer gemischt. Die erhaltene Formmasse wird dann zu einer Folie kalandriert oder extrudiert. Obwohl sowohl die Kalandrierung als auch die Extrusion von Formmassen auf der Basis von PVC wohlbekannt sind, sei bezüglich der Herstellung der Folie durch Kalandrierung noch folgendes angefügt: Die Kalandrierung wird vorzugsweise derart durchgeführt, daß die Formmasse a) bei einer Temperatur von 140 bis 180 °C, vorzugsweise 150 bis 170 °C, vorgeliert wird, zweckmäßigerweise in einem Kneter und/oder auf einem aus mindestens zwei Walzen bestehenden Walzwerk, und b) die vorgelierte Masse auf einem vorzugsweise aus vier oder fünf Walzen bestehenden Kalander bei einer Walzentemperatur von 180 bis 225 °C, vorzugsweise 190 bis 210 °C, zur Folie kalandriert wird, wobei die Walzen im einzelnen derart erhitzt sind, daß die erste und die letzte Walze etwa die gleiche Temperatur und die dazwischenliegenden Walzen eine um 5 bis 10 °C höhere Temperatur als die anderen beiden Walzen besitzen (Hochtemperatur-Kalandrierverfahren). Die kalandrierte Folie wird von der letzten Kalanderwalze abgezogen, mit Hilfe von Kühlwalzen gekühlt und in der Regel einer Aufwickeleinrichtung zugeführt. Die Dicke der Folie beträgt im allgemeinen 60 bis 200 $\mu$m.

Zum Aufbringen der erfindungsgemäß vorgeschlagenen PVC-Folie als Etikette können die üblichen Methoden angewandt werden. So kann die Folie, das heißt der Folienabschnitt, durch Kleben oder Aufschrumpfen angebracht werden, wobei Aufschrumpfen bevorzugt ist. Das Aufschrumpfen wird im allgemeinen bei einer Folientemperatur von etwa 140 °C vorgenommen, vorzugsweise bei etwa 90 °C. Zum Zwecke des Schrumpfens hat man klarerweise der Folie durch Längs- und/oder Querstrecken das gewünschte Schrumpfverhalten zu geben. Längs- und Querstrecken von Folien auf der Basis von PVC ist wohlbekannt, so daß hier lediglich die zweckmäßigen Streckverhältnisse und die daraus resultierende Schrumpfung angegeben seien. Zweckmäßige Längs- und Querstreckverhältnisse liegen bei 1 : 1,2 bis 4, was zu einem Längsschrumpf (Längenverkürzung) und zu einem Querschrumpf (Querverkürzung) von bis zu etwa 60 % führt.

Von den beiden Streckrichtungen ist die Querstreckung (Streckung quer zur Laufrichtung der Folie bei ihrer Herstellung) in der Regel bevorzugt, weil in diesem Fall der Folienabschnitt für die Etikettierung in vorteilhafterer Weise entnommen werden kann. Bei einer biaxialen Streckung der Folie zur Erreichung eines Längs- und Querschrumpfes (Flächenschrumpfung) liegen die Streckverhältnisse im allgemeinen bei 1 : 1,2 bis 2 in Längsrichtung und 1 : 1,2 bis 4 in Querrichtung, woraus ein Flächenschrumpf von bis zu etwa 60 % resultiert. Die Dicke der verstreckten Folie liegt in der Regel bei 20 bis 80 $\mu$m.

Die erfindungsgemäß vorgeschlagenen glasklaren PVC-Folien weisen alle jene Eigenschaften auf, die an PVC-Etikettenfolien gestellt werden. Was sie besonders auszeichnet, ist das Beibehalten der ursprünglichen Glasklarheit trotz einer Naßpasteurisierung. Die erfindungsgemäß vorgeschlagenen glasklaren PVC-Folien werden während des Pasteurisiervorganges, ebenso wie die im Stand der Technik empfohlen glasklaren PVC-Etikettenfolien, mehr oder weniger trüb, sie verlieren aber diese Trübung innerhalb einer kurzen Zeit nach Abschluß des Pasteurisierens; sie klaren also ohne irgendwelche Vorkehrungen wieder auf und nehmen die ursprüngliche Glasklarheit an (die Zeit des Aufklarens ist in der Regel jene Zeit, die bis zum Abkühlen der Behältnisse auf Raumtemperatur nach Abschluß des Pasteurisierens verstreicht, also eine Zeit von etwa 5 bis 30 Minuten). Ganz im Gegensatz dazu verlieren die im Stand der Technik empfohlenen PVC-Etikettenfolien die während des Pasteurisierens angenommene Trübung nicht mehr, sie bleiben vielmehr dauerhaft trüb. Das unerwartete Ergebnis bei der erfindungsgemäß vorgeschlagenen Etikettenfolie dürfte aus der speziellen Kombination von ausgewähltem Polyvinylchlorid und ausgewähltem Gleitmittel resultieren, wobei das Gleitmittel einen besonders entscheidenden Anteil haben dürfte.

Die Erfindung wird nun an Beispielen und Vergleichsbeispielen noch näher erläutert.

Die in den nachstehenden Beispielen 1 bis 6 und in den Vergleichsbeispielen I bis 3 angegebenen Formmassen wurden in üblicher Weise in einem Schnellmischer gemischt. Jede Mischung wurde auf einem Mischwalzwerk bei einer Temperatur von 160 bis 180 °C vorgeliert und auf einem 4-Walzen-Kalander unter Bildung eines Rollknetes vor jedem Walzenspalt (Hochtemperatur-Kalandrierung) zu einer Folie mit einer Dicke von jeweils etwa 100 $\mu$m kalandriert. Die Folien wurden dann in einem üblichen Breitreckrahmen bei einer Temperatur von 125 bis 130 °C im Verhältnis von 1 : 2 quergestreckt. Von den quergestreckten, etwa

50 μm dicken Folien wurde der Trübungswert (Reflektometerwert) nach DIN 67 530 bei einem Einstrahlungswinkel von 85° gemessen (DIN = Deutsche Industrienorm). Der Querschrumpf der quergestreckten Folien betrug etwa 50 % bei 95 °C 15 Minuten lang.

Als zu etikettierendes Behältnis wurde eine übliche 0,5-1-Glasflasche mit einem zylindrischen Bauch von 140 mm Höhe und 220 mm Umfang gewählt, die für Fruchtsäfte, Bier und dergleichen gebräuchlich ist. Um den Flaschenbauch wurde ein Schlauchstück von 80 mm Länge und 240 mm Umfang gestülpt, das von den quergestreckten Folien bereitet worden ist (das Schlauchstück wurde durch Verkleben eines entsprechenden Folienabschnittes bereitet, und zwar derart, daß die Schrumpfung in Radialrichtung lag). Das Aufschrumpfen des überstülpten Schlauchstückes erfolgte durch Erhitzen auf 140 °C mittels heißer Luft, 5 Minuten lang. Die so mit den glasklaren Folien der Beispiele 1 bis 6 und Vergleichsbeispiele 1 bis 3 etikettierten ungefärbten Glasflaschen wurden in ein Wasserbad von 80 °C gestellt, 45 Minuten lang, wobei das 80 °C heiße Wasser bis etwas über das Etikett reichte (dieser Vorgang entspricht einer Pasteurisierung im Wasserbad von 80 °C). Bald nach dem Einstellen der etikettierten Flaschen in das 80 °C heiße Wasser wurden die glasklaren Etiketten deutlich trüb. Nach Ablauf der genannten 45 Minuten wurden die Flaschen mit dem trüben Etikett aus dem heißen Wasserbad genommen und bei Raumtemperatur abkühlen und trocknen gelassen, was etwa 20 Minuten lang dauerte. Nun wurden die Etiketten von den Flaschen abgelöst und auf ihre Klarheit geprüft, und zwar wiederum durch Messen des Trübungswertes (Reflektometerwertes) nach DIN 67 530 bei einem Einstrahlungswinkel von 85°. Schon die Prüfung mit dem Auge zeigte, daß die Etiketten aus den Folien der Beispiele 1 bis 6 im wesentlichen ebenso glasklar waren wie vor der 80 °C heißen Naßbehandlung, jene aus den Folien der Vergleichsbeispiele aber mehr oder weniger stark trüb waren. Die Etiketten der Folien der Beispiele 1 bis 6 verloren während des Abkühlens und Trocknens bei Raumtemperatur die im heißen Wasserbad erhaltene Trübung und klarten bis zur ursprünglichen Glasklarheit auf, während die Etiketten gemäß den Vergleichsbeispielen 1 bis 3 trüb blieben.

Die Ergebnisse aus den genannten Trübungswert-Messungen der Folien vor und nach der 80 °C heißen Naßbehandlung sind in der nachstehenden Tabelle zusammengefaßt. Auch diese Ergebnisse zeigen, daß die Folien der Beispiele 1 bis 6 einer 80 °C heißen Wasserbadbehandlung ohne wesentlichen Verlust ihrer ursprünglichen Glasklarheit standzuhalten vermögen, nicht aber die Folien der Vergleichsbeispiele 1 bis 3, die durch diese Behandlung eine dauerhafte und vergleichsweise starke Trübung erleiden.

| Beispiel 1 | |
|---|---|
| 100 Gew.-Teile | Masse-PVC mit K-Wert 57 |
| 0,8 Gew.-Teile | Ethylendiamindistearat |
| 0,8 Gew.-Teile | Dioctyl-zinn-bis-ethylhexylthioglykolat |

| Beispiel 2 | |
|---|---|
| 100 Gew.-Teile | Masse-PVC mit K-Wert 60 |
| 5 Gew.-Teile | MBS-Modifier |
| 0,5 Gew.-Teile | Mischester (Komplexester) aus 4 mol Adipinsäure, 12 mol Ölsäure und 5 mol Pentaerythrit |
| 0,8 Gew.-Teile | Dibutyl-zinn-bis-ethylhexylthioglykolat |

| Beispiel 3 | |
|---|---|
| 70 Gew.-Teile | Masse-PVC mit K-Wert 60 |
| 30 Gew.-Teile | Masse-PVC mit K-Wert 57 |
| 0,3 Gew.-Teile | oxidiertes Polyethylenwachs mit den folgenden Kennzahlen: mittlere Molmasse 6 000, Dichte bei 20 °C 0,98 und Säurezahl 16 |
| 0,8 Gew.-Teile | Dioctyl-zinn-di-dodecylmercaptid |

| Beispiel 4 | |
|---|---|
| 100 Gew.-Teile | Masse-PVC mit K-Wert 60 |
| 1 Gew.-Teil | Dicyclohexylphthalat |
| 0,1 Gew.-Teile | Polyethylenwachs wie in Beispiel 3 |
| 0,8 Gew.-Teile | Dimethyl-zinn-bis-ethylhexylthioglykolat |

| Beispiel 5 | |
|---|---|
| 100 Gew.-Teile | Masse-PVC mit K-Wert 60 |
| 0,3 Gew.-Teile | Mischester (Komplexester) aus 6 mol Adipinsäure, 16 mol Stearinsäure und 7 mol Pentaerythrit |
| 0,7 Gew.-Teile | Decyl-stearyl-phthalat |
| 0,8 Gew.-Teile | Dioctyl-zinn-bis-ethylhexylthioglykolat |

| Beispiel 6 | |
|---|---|
| 70 Gew.-Teile | Masse-PVC mit K-Wert 60 |
| 30 Gew.-Teile | Masse-PVC mit K-Wert 65 |
| 0,2 Gew.-Teile | Stearinsäure |
| 0,5 Gew.-Teile | Glycerindioleat |
| 0,8 Gew.-Teile | Dibutyl-zinn-bis-ethylhexylthioglykolat |

| Vergleichsbeispiel 1 | |
|---|---|
| 100 Gew.-Teile | Masse-PVC mit K-Wert 57 |
| 0,8 Gew.-Teile | Wachs E (Ester aus Montansäure und 1,3-Butandiol) |
| 0,8 Gew.-Teile | Dioctyl-zinn-bis-ethylhexylthioglykolat |

| Vergleichsbeispiel 2 | |
|---|---|
| 100 Gew.-Teile | Masse-PVC mit K-Wert 60 |
| 0,5 Gew.-Teile | Wachs OP (Ester aus Montansäure und 1,3-Butandiol, gekälkt) |
| 0,8 Gew.-Teile | Dibutyl-zinn-bis-ethylhexylthioglykolat |

| Vergleichsbeispiel 3 | |
|---|---|
| 70 Gew.-Teile | Masse-PVC mit K-Wert 60 |
| 30 Gew.-Teile | Masse-PVC mit K-Wert 57 |
| 0,3 Gew.-Teile | Calciumstearat |
| 0,8 Gew.-Teile | Dioctyl-zinn-di-dodecylmercaptid |

Tabelle

Trübungswerte nach DIN 67 530 der Ausgangsfolien und der Etiketten, die aus den Ausgangsfolien bereitet und einer 80 °C heißen Wasserbadbehandlung ausgesetzt wurden.

| Beispiele | Trübungswerte in % | |
|---|---|---|
| | Ausgangsfolien | Etiketten |
| 1 | 7 | 8 |
| 2 | 10 | 12 |
| 3 | 8 | 9 |
| 4 | 9 | 10 |
| 5 | 10 | 11 |
| 6 | 10 | 11 |
| Vergleichs-beispiele | | |
| 1 | 9 | 20 |
| 2 | 10 | 30 |
| 3 | 8 | 40 |

**Patentansprüche**

1. Verwendung einer glasklaren Polyvinylchloridfolie zur Etikettierung von Behältnissen, die anschließend einer Naßpasteurisierung ausgesetzt werden, bestehend im wesentlichen aus
   A) 100 Gew.-Teilen Polyvinylchlorid, ausgewählt aus der Gruppe bestehend aus Masse-Polyvinylchlorid und Suspensions-Polyvinylchlorid,
   B) 0,05 bis 2 Gew.-Teilen Gleitmittel, ausgewählt aus der Gruppe bestehend aus Fettsäuren, Fettsäureamiden, Estern von Fettsäuren mit mehrwertigen Alkoholen, Estern von Fettsäuren und Dicarbonsäuren mit mehrwertigen Alkoholen, Estern von Phthalsäure mit ein- oder mehrwertigen Alkoholen und Polyethylenwachse, und
   C) 0,3 bis 3 Gew.-Teilen Wärmestabilisator, ausgewählt aus der Gruppe der Zinnstabilisatoren.

2. Verwendung nach Anspruch 1, wobei das Polyvinylchlorid ein Masse-Polyvinylchlorid ist.

3. Verwendung nach Anspruch 1 oder 2, wobei das Gleitmittel ausgewählt ist aus der Gruppe bestehend aus Palmitinsäure, Stearinsäure, Ethylendiamindipalmitat, Ethylendiamindistearat, Partialestern oder Vollestern von $C_{12}$ bis $C_{18}$-Fettsäuren mit Glycerin, Estern von $C_{12}$ bis $C_{18}$-Fettsäuren und $C_4$ bis $C_8$-Dicarbonsäuren mit Glycerin, Erythrit, Pentaerythrit, Trimethylolethan oder Trimethylolpropan, Estern von Phthalsäure mit $C_{10}$ bis $C_{18}$-Fettalkoholen oder Cyclohexanol und oxidierten Polyethylenwachsen mit einer mittleren Molmasse von 1 000 bis 15 000, einer Dichte bei 20 °C von 0,96 bis 1,00 und mit einer Säurezahl von 14 bis 70.

4.  Verwendung nach Anspruch 1 oder 2, wobei das Gleitmittel ausgewählt ist aus der Gruppe bestehend aus Palmitinsäure, Stearinsäure, Ethylendiamindipalmitat, Ethylendiamindistearat, Partialestern oder Vollestern von $C_{12}$ bis $C_{18}$-Fettsäuren mit Glycerin, Estern von $C_{12}$ bis $C_{18}$-Fettsäuren und $C_4$ bis $C_8$-Dicarbonsäuren mit Pentaerythrit im Molverhältnis von
1 : (2 bis 3) : (1 bis 1,5), Estern von Phthalsäure mit $C_{10}$ bis $C_{18}$-Fettalkoholen oder Cyclohexanol und oxidierten Polyethylenwachsen mit einer mittleren Molmasse von 4 000 bis 10 000, einer Dichte bei 20 °C von 0,96 bis 1,00 und mit einer Säurezahl von 14 bis 70.

5.  Verwendung nach einem oder mehreren der Ansprüche 1 bis 4, wobei die Menge an Gleitmittel 0,1 bis 1,5 Gew.-Teile pro 100 Gew.-Teile Polyvinylchlorid und die Menge an Wärmestabilisator 0,5 bis 2 Gew.-Teile pro 100 Gew.-Teile Polyvinylchlorid beträgt.